Europäisches Patentamt

European Patent Office

Office européen des brevets

(11) Veröffentlichungsnummer: **0 014 466**
**A1**

(12) **EUROPÄISCHE PATENTANMELDUNG**

(21) Anmeldenummer: **80100594.3**

(22) Anmeldetag: **06.02.80**

(51) Int. Cl.³: **A 47 J 37/04**

(30) Priorität: **07.02.79 DE 2904661**

(43) Veröffentlichungstag der Anmeldung:
**20.08.80 Patentblatt 80/17**

(84) Benannte Vertragsstaaten:
**AT BE CH FR NL SE**

(71) Anmelder: **SIA-Handelsgesellschaft m.b.H.**
**Hamburger Strasse 36-42**
**D-3000 Braunschweig(DE)**

(72) Erfinder: **Schneider, Wulf**
**Kalbersnacken 22**
**D-5760 Arnsberg 1(DE)**

(74) Vertreter: **Döring, Rudolf, Dr. et al,**
**Joseph-Spital-Strasse 7**
**D-8000 München 2(DE)**

(54) **Grillspiess.**

(57) Um mit Unwuchten, die durch ungleichförmige Gewichtsverteilung des Grillgutes gegenüber der Drehachse eines Grillspießes entstehen, leichter umgehen zu können, wird der Grillspieß mit einem Unwucht- Ausgleichsgewicht (2,60) ausgerüstet. Das Unwucht- Ausgleichsgewicht ist am Grillspieß einstellbar so angeordnet, daß sein Schwerpunkt in einen ausgewählten radialen Abstand von der Spießachse (15) gebracht werden kann.

Fig.1

EP 0 014 466 A1

Croydon Printing Company Ltd.

SIA-Handelsgesellschaft m.b.H.

Hamburger Str. 36 - 42
3300 Braunschweig

Grillspieß

Die Erfindung betrifft einen Grillspieß für Grillgeräte mit
Umlaufantrieb für den Spieß.

Bei Grillspießen der herkömmlichen Bauart besteht ein Problem
darin, daß man beim Aufspießen eines Bratens oder dgl. Grillgut
selten auf Anhieb die Achse des Grillspießes mit der Schwerpunktachse des Grillgutes in Deckung bringt. Man ist dabei auf
das eigene Geschick und auf mehrere Versuche angewiesen, sodaß
das Grillgut zumeist mehrfach mit dem Spieß durchstochen wird.
Dennoch ergibt sich auch bei größter Sorgfalt häufig ein Zustand, bei dem das Grillgut mit dem Spieß nicht einwandfrei
und gleichförmig umläuft mit der Folge, daß das Gut ungleichmäßig gegart und gebräunt wird. Selbst bei Verwendung eines sogenannten Grillkorbes läßt sich diese Schwierigkeit nicht vermeiden. Man hat sogar bei Schaschlikgarnituren das Auftreten
solcher Unwuchten beobachtet, die generell die Lebensdauer
des Grillmotors, insbesondere auch die Lebensdauer der als
Energiequelle dienenden Batterien herabsetzen.

- 2 -

Es ist Aufgabe der vorliegenden Erfindung hier Abhilfe zu
schaffen und einen Grillspieß so weiterzubilden, daß auch ohne
besonderes Geschick und bei nur einem einzigen Versuch ein
von Unwuchten im wesentlichen freier gleichförmiger Umlauf des
Grillgutes erreicht wird.

Diese Aufgabe wird erfindungsgemäß gelöst durch ein Unwucht-
Ausgleichsgewicht, das in gewählte Abstände von der Spießachse
einstellbar ist und zwar z.B. mittels einer Klemme nach Art
einer Stativklemme an beliebiger Stelle des Spießes oder mittels
einer - vorzugsweise flexible Spießverlängerung.

Auf diese Weise bedarf es keines besonderen Geschickes und auch
keiner mehrfachen Versuche, um den Spieß in das Grillgut zu
stechen, da hierbei auftretende Unwuchten nachträglich auf einfachem Wege und mit hinreichender Genauigkeit ausgeglichen werden können. Dadurch erhält man einen leicht zu bedienenden
Grillspieß, der einem gleichzeitig die Grundlage dafür gibt,
das Grillgut mit größter Gleichmäßigkeit zu garen und zu bräunen und gleichzeitig den Grillmotor und dessen Energiequelle
zu schonen, sodaß diese höhere Lebensdauer aufweisen.

Das Unwucht-Ausgleichsgewicht läßt sich dabei nicht nur in gewollte Abstände, sondern auch in Richtungen einer gewollten Umfangslage in Bezug auf das aufgespießte Grillgut oderderen Unwucht verbringen.

Bei dem neuen Grillspieß ist es lediglich erforderlich, den Grillspieß durch das Grillgut zu stoßen und durch Einsetzen des Grill-

- 3 -

spießes in das Grillgerät festzustellen, ob durch das Aufspießen eine Unwucht entstanden ist. Liegt eine solche vor,
wird das Unwucht-Ausgleichsgewicht in der entsprechenden Gegenrichtung und in einer dem Ausmaß der Unwucht entsprechenden Entfernung von der Spießachse eingestellt. Nunmehr kann der Grill
in Betrieb genommen werden, wobei das Grillgut gleichförmig und
unter Schonung der Geräteteile umläuft.

Zweckmäßigerweise ist das Unwuchtausgleichgewicht einem Spießtraggriff zugeordnet. Dabei kann die Anordnung zweckmäßigerweise
so getroffen werden, daß der Traggriff selbst ebenfalls mit
Hilfe der Spießverlängerung in gewählte Abstände von der Spießachse und/oder in gewählte Winkellagen gegenüber dieser Spießachse eingestellt werden kann.

Die Spießverlängerung ist zweckmäßigerweise formhaltig flexibel
ausgebildet. Darunter wird eine Spießverlängerung verstanden,
die ausbiegbar ist und in jeder ausgebogenen oder verformten
Stellung ihre Form beibehält, bis durch erneuten Kraftaufwand
der Spießverlängerung eine neue Form erteilt wird.

Dabei ist zweckmäßigerweise der Spieß an einem Ende der Spießverlängerung und der Traggriff mit Ausgleichsgewicht an dem
anderen Ende der Spießverlängerung vorgesehen. Dabei kann der
Traggriff selber das Ausgleichsgewicht bilden oder vorteilhafterweise noch mit einem zusätzlichen Ausgleichsgewicht versehen
sein, das dann vorteilhafterweise an dem dem Spieß angewandten
Ende des Traggriffes vorgesehen wird.

- 4 -

Die Spießverlängerung ist bei einem bevorzugten Ausführungsbeispiel zwischen einer wirksamen Stellung und einer Nichtgebrauchsstellung in dem Traggriff verstellbar. Das bedeutet, daß die Spießverlängerung in der Nichtgebrauchsstellung vollständig von dem Traggriff aufgenommen ist, sodaß auf einfache Weise in dieser Stellung der Traggriff starr und fluchtend mit dem Spieß verbunden ist. Somit kann der Traggriff stets gegenüber dem Spieß in eine Stellung gebracht werden, in der sich der Spieß und das daran befindliche Gut über den Traggriff leicht und zuverlässig handhaben läßt. Wenn es gelingt auf Anhieb den Spieß so in das Grillgut zu stoßen, daß eine Unwucht nicht entsteht, kann die Spießverlängerung in der Nichtgebrauchsstellung im Traggriff verbleiben. Stellt man jedoch eine Unwucht fest, wird die Spießverlängerung gegenüber dem Traggriff in die Gebrauchsstellung oder wirksame Stellung überführt und das Unwuchtausgleichsgewicht in die erforderliche Ausgleichsstellung gebracht.

Es ist dabei vorteilhaft, wenn man für die beiden Stellungen Anschläge und/oder Rasten vorsieht, um die Handhabung des Grillspießes zu erleichtern.

Die mit dem Grillgut aufgetretene Unwucht am Spieß läßt sich ihrer Richtung nach leicht feststellen, indem man den mit dem Gut versehenen Grillspieß im Grillgerät sich in eine Lage auspendeln läßt, in der der Schwerpunkt des Systems unterhalb der Spießachse liegt. In dieser Stellung muß also das Unwuchtausgleichsgewicht nach oben aus der Fluchtung mit der Spießachse verstellt werden. Das notwendige Ausmaß der Verstellung kann man durch leichtes Drehen des Spießes und freigeben feststellen, da sich der Grillspieß stets in eine neue Lage einpendelt, so lange noch eine nennenswerte Unwucht vorhanden ist. Durch entsprechende Korrekturen läßt sich die Unwucht weitgehend ausgleichen. Es bedarf dazu wenig Geschick oder Aufmerksamkeit. Nach dem Ausgleichen der Unwucht wird der Grillmotor aufgesteckt und eingeschaltet.

Ist das Grillgut fertig, biegt man die Grillverlängerung wieder in Fluchtungsstellung mit der Spießachse und bringt sie in die Nichtgebrauchsstellung innerhalb des Traggriffes, sodaß dieser nunmehr starr mit dem Spieß verbunden ist.

Zur Festlegung des Traggriffes in den zwei verschiedenen möglichen Stellungen gegenüber der Spießverlängerung kann auch ein einfacher Verriegelungsstift im Traggriff dienen, der in eine in Fluchtung damit verbringbare Bohrung oder Ausnehmung an den beiden Enden der Spießverlängerung gebracht werden kann. Vorteilhafterweise wird jedoch ein federndes Riegelelement verwendet, das automatisch in die Verriegelungsstellung federnd einrastet und gegen die Federkraft in die Lösestellung gebracht werden kann.

- 6 -

Die Erfindung wird nachfolgend anhand schematischer Zeichnungen an mehreren Ausführungsbeispielen näher erläutert.

Es zeigen:

Fig. 1 den neuen Grillspieß im Längsschnitt in einer Ausführungsform;

Fig. 2 in ähnlicher Darstellung eine abgewandelte Ausführungsform;

Fig. 3 zeigt schematisch die beiden möglichen Stellungen, nämlich in Fig. 3a die Gebrauchsstellung und in Fig. 3b die Nichtgebrauchsstellung des Unwucht-Ausgleichgewichtes;

Fig. 4 in größerem Maßstabe und im Ausschnitt einen Längsschnitt durch das dem Spieß zugewandte Ende des Traggriffes;

Fig. 5 einen Querschnitt entlang der Schnittebene V-V der Fig.4;

Fig. 6 in ähnlicher Darstellung wie Fig. 1 ein abgewandeltes Ausführungsbeispiel;

Fig. 7 ein weiter abgewandeltes Ausführungsbeispiel teilweise im Schnitt;

Fig. 8 einen Querschnitt durch die Ausführung nach Fig. 7;

Fig.9 in ähnlicher Darstellung wie Fig.7 ein abgewandeltes Ausführungsbeispiel und

Fig.10 eine auseinandergezogene perspektivische Darstellung der Teile, die in Fig.9 gezeigt sind,

Fig.11 ein abgewandeltes Ausführungsbeispiel.

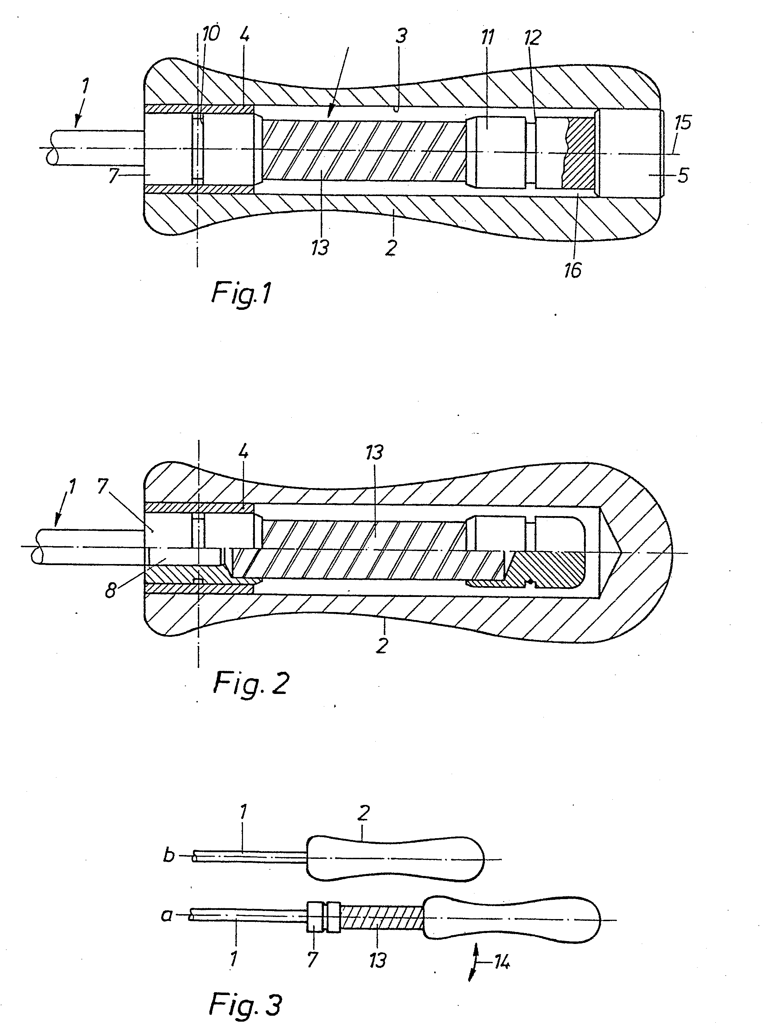

Der Grillspieß nach Fig.1 besteht aus dem üblichen Spieß 1, der mit einem Traggriff 2 starr und fest verbunden werden kann. Der Traggriff 2 besteht beispielsweise aus Holz. Im dargestellten Beispiel weist er eine durchgehende zentrale Bohrung 3 auf. In die Bohrung ist auf der Seite des Spießes 1 eine Führungsbuchse 4, z.B. aus Metall, fest eingesetzt. Das abgewandte Ende der Bohrung 3 ist im dargestellten Beispiel durch ein massives, kolbenartiges und fest eingesetztes Ausgelcihsgewicht 5 verschlossen.

Bei der Stellung nach Fig.1 ist in der Buchse 4 mit leichtem Spiel eine kolbenartige Fassung 7 aufgenommen, welche eine Umfangsnut 10 aufweist, deren Bedeutung weiter unten dargelegt wird. Die Fassung 7 ist mit dem Spieß 1 starr und vorzugsweise bleibend verbunden. Am anderen Ende ist die Fassung 7 mit einem Ende einer Spießverlängerung 6 verbunden. Die Spießverlängerung 6 besteht aus einem formhaltig flexiblen Teil, z.B. einem flexiblen Metallschlauch, der so ausgebildet ist, daß er jede ausgebogene oder verformte Stellung formhaltig beibehält, bis von außen Rückformungskräfte aufgebracht werden, welche die Spießverlängerung in eine neue Stellung oder Form ausbiegen. In Fig.1 ist der Metallschlauch 13 in der geraden Stellung gezeigt, in der er mit der Achse 15 des Spießes 1 fluchtet. Der Metallschlauch 13 ist am anderen Ende mit einer weiteren kolbenartigen Fassung 11 fest verbunden, die ebenfalls eine Umfangsausnehmung oder Nut 12 aufweist. An dem dem Spieß 1 abgewandten Ende weist die Fassung 11 einen Anschlag 16, z.B. einen Sprengring auf. Die in Fig. 1 gezeigte Stellung wird dadurch bestimmt, daß die Fassung 11 gegen die nach innen weisende Stirnseite des Ausgleichsgewichtes 5 anstößt. Aus der dargestellten Stellung, die der Stellung nach Fig. 3b entspricht, kann der Spieß 1 mit der Verlängerung 6 aus dem Traggriff 2 in die Stellung nach Fig. 3a ausgezogen werden, in der die Fassung 11 in der Buchse 4 aufgenommen und durch eine nicht dargestellte Verriegelung gehalten wird. In dieser Stellung ragt die Spießverlängerung 6 frei aus dem Traggriff heraus und kann gegenüber der Achse 15 des Spießes 1 frei nach allen Seiten und um jedes beliebige Maß ausgebogen werden, sodaß sich das Ausgleichsgewicht 5 und der dazugehörige Traggriff 2 in einem ausgewählten radialen Abstand von der Achse 15 des Spießes befindet, wobei nicht nur das Ausmaß dieses Abstandes, sondern auch die radiale Richtung, in der die Ausbiegung erfolgt, frei wählbar ist.

Für die Ingebrauchnahme wird der Spieß in der Stellung nach Fig. 1 oder Fig. 3b in das Grillgut gestoßen wobei man versucht, den Spieß 1 möglichst zentral durch das Grillgut zu führen. Man hängt nun den beladenen Spieß in die Garnitur ein und sieht ob das Grillgut durch Unwucht den Spieß in eine bestimmte Lage dreht, in der der Unwuchtschwerpunkt nach unten weist. Bleibt der Grillspieß in jeder Lage frei stehen, ohne daß eine Drehung stattfindet, ist dies ein Anzeichen dafür, daß auf Anhieb der Spieß durch den Schwerpunkt des Grillgutes geführt worden ist.

Zeigt sich jedoch eine Unwucht, wird die nicht dargestellte Raste gelöst und der Traggriff 2 gegenüber der Spießverlängerung 6 in die Stellung nach Fig. 3a verstellt und der Traggriff mit dem Ausgleichsgewicht nach oben ausgebogen. Durch leichtes Drehen des Spießes kann man feststellen, ob die Ausbiegung ausreicht, um die Unwucht zu kompensieren oder ob eine neue Unwucht entstanden ist, die sich durch das Drehverhalten des Spießes ohne weiteres bemerkbar macht. Man kann noch entsprechende Korrekturen anbringen und sobald die Unwucht ausgeglichen ist, kann der Grillmotor auf den Spieß gesteckt werden. Man erhält nunmehr ein völlig gleichförmiges Umlaufen und gleichförmiges garen des Gutes unter größtmöglicher Schonung der Antriebselemente.

Nach fertigstellen des Grillgutes wird die Spießverlängerung 6 in die gerade und mit der Achse 15 fluchtende Stellung nach Fig. 1 gebracht und in den Traggriff 2 zurückgestoßen, bis die Fassung 7 wieder voll in der Hülse oder Buchse 4 aufgenommen und das nicht dargestellte Rastelement eingerastet ist. Nunmehr ist der Traggriff 2 wieder starr mit dem Spieß 1 verbunden.

Das Ausführungsbeispiel nach Fig. 2 unterscheidet sich von dem
nach Fig. 1 lediglich dadurch, daß kein gesondertes Ausgleichsgewicht vorgesehen ist, sondern der Traggriff 2 selber das Ausgleichsgewicht alleine bildet. Man erkennt, daß das Ende 8 des
Spießes 1 geriffelt und mit Preßsitz in die Fassung 7 eingesetzt ist.

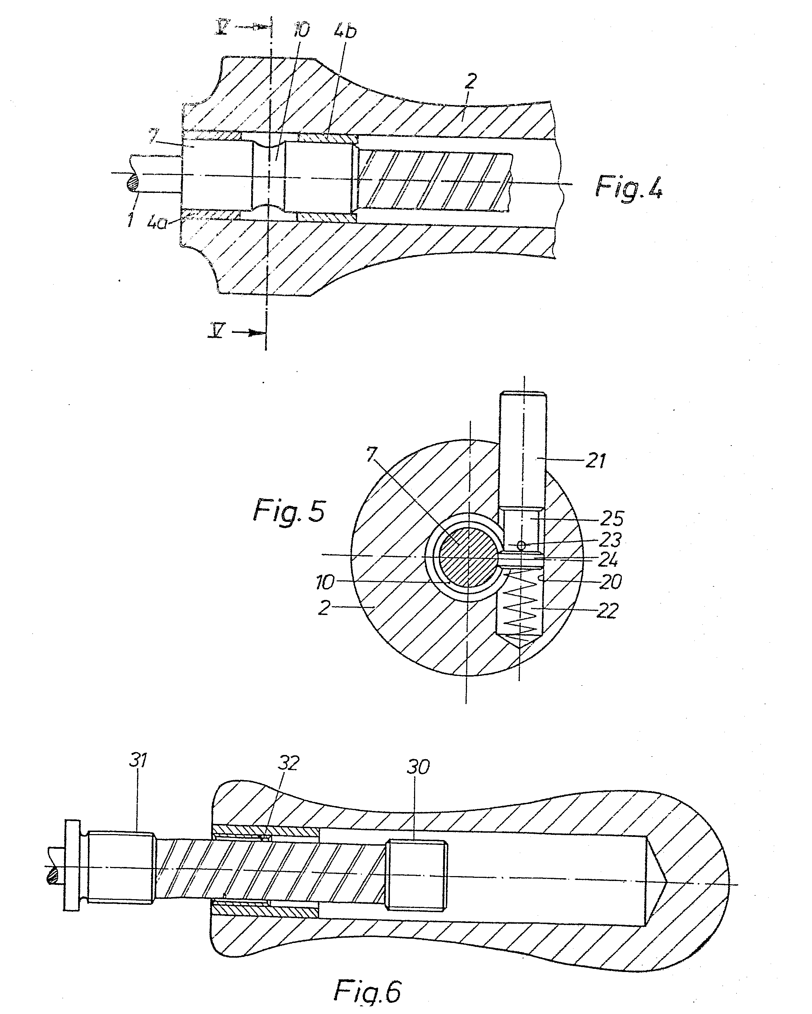

Bei dem Ausführungsbeispiel nach Fig. 4 ist die Buchse aus zwei
Buchsenteilen 4a und 4b gebildet, wobei zwischen den beiden ein
axialer Abstand belassen ist. Statt dessen kann aber auch eine
durchgehende Buchse vorgesehen sein, sofern diese im Bereich
der Ring nut 10 eine in Umfangsrichtung langgestreckte Ausnehmung für die Durchführung eines Rastelementes aufweist.

In Fig. 5 ist das zugehörige Rastelement dargestellt. Es handelt
sich um einen Sperrbolzen 21, der einen eingedrehten Abschnitt 25
und einen Sperrabschnitt 24 aufweist. Der Sperrbolzen ist zusammen mit einer Feder 22 in einer Querausnehmung 20 des Traggriffes 2 aufgenommen. Seine Endstellungen werden durch einen
Begrenzungsstift 23 bestimmt, der mit entsprechenden Anschlägen
in der Bohrung zusammenwirkt. In Fig. 5 ist der Sperrbolzen in
seiner Sperrstellung gezeigt, in der der Bund 24 in die Umfangsnut 10 der Fassung 7 eingreift. Durch Eindrücken des Sperrbolzens 21 entgegen der Wirkung der Feder 22 gibt der Bund 24
die Nut 10 frei, sodaß die Fassung 7 mit der Spießverlängerung
aus dem Traggriff herausgezogen werden kann. Dabei tritt die
Fassung (nicht dargestellt) am anderen Ende der Spießverlängerung in die geteilte oder einteilige Büchse und der Sperrbolzen 21 rastet mit seinem Bund 24 selbsttätig in die Umfangsnut an der anderen Fassung ein, sobald die voll ausgezogene Stellung erreicht ist. Ist ein Anschlag 16 gemäß Fig. 1 vorgesehen, so braucht die Bedienungsperson die Spießverlängerung nur so lange herauszuziehen, bis der Anschlag 16 an die nach innen weisende Stirnseite der Buchse 4b anschlägt. In dieser Stellung findet sich dann die Rastnut der hinteren Fassung in Fluchtung mit dem Bund 24.

Als Rastelement kann auch ein federnder Stift vorgesehen sein, der radial in einer Querbohrung des Traggriffes verschiebbar und bei Fluchtungsstellung in eine Querbohrung der Fassungen einführbar ist.

Eine andere Möglichkeit der Feststellung der Endlagen ist in Fig. 6 gezeigt. Hier sind die beiden Fassungen 30 und 31 mit Außengewinde versehen während die Buchse ein Innengewinde 32 aufweist. Durch Schraubbewegung läßt sich der Traggriff jeweils mit der einen oder mit der anderen Fassung fest verschrauben, wodurch die beiden Endstellungen bestimmt werden.

Eine andere Möglichkeit der Ausbildung besteht in federnden Rastbügeln, die mit einem Bügelabschnitt in die Umfangsnuten der Fassungen eingreifen.

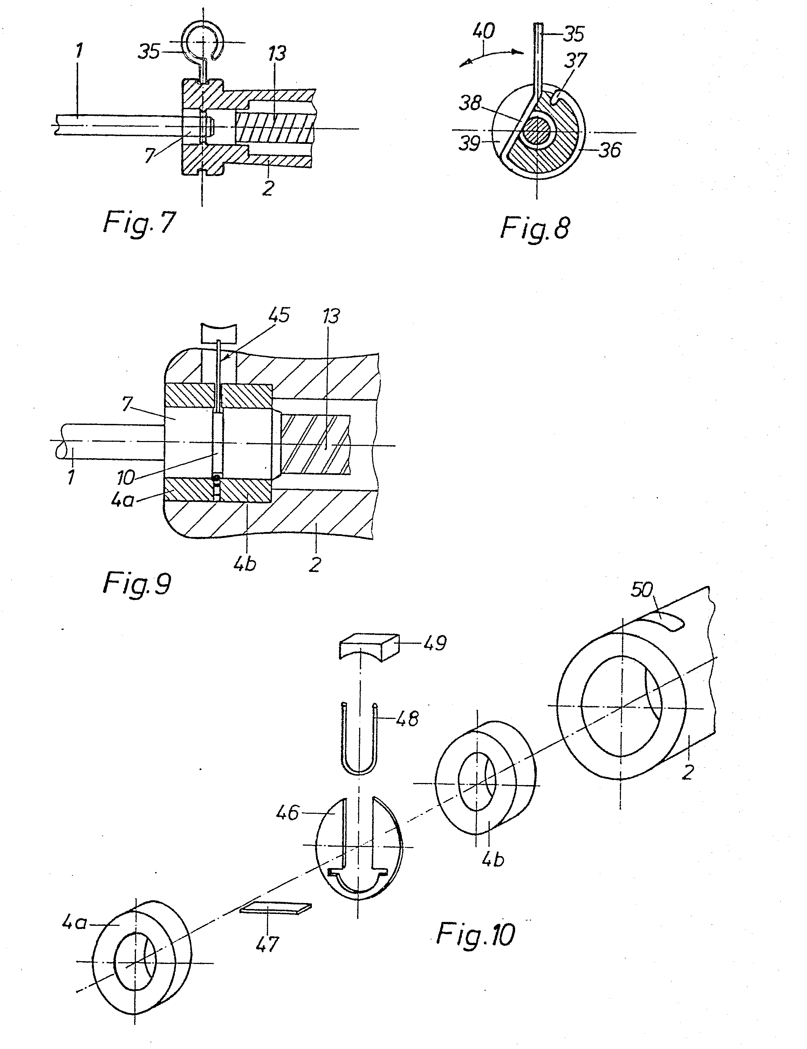

Ein Ausführungsbeispiel von federnden Rastbügeln zeigen die
Fig. 7 und 8. Hierbei ist ein federnder Drahtbügel 35 mit
einem halbkreisförmig gebogenen Abschnitt 36 in eine Außennut
am Traggriff eingelegt und mit dem freien abgebogenen Ende 37
in einer radialen Bohrung verankert. In einem senkrecht zur
Achse verlaufenden Schlitz 39 liegt ein abgebogener Schenkel 38
des Drahtbügels der Art, daß er in einer der beiden Endstellungen
der Spießverlängerung in die Umfangsnut der Fassungen, z.B. der
Fassung 7 einrastet. An diesen Schenkel setzt ein nach außen
ragender Griffabschnitt 35 an, mit dem dieser Schenkel entsprechend dem Doppelpfeil 40 elastisch ausgebogen werden kann,
um die Nut der betreffenden Fassung freizugeben oder selbsttätig in die Nut wieder einzurasten.

Eine weitere Ausführungsform für einen federnden Rastbügel
zeigen die Figuren 9 und 10. In einer zweiteiligen Buchse 4a,
4b ist ein U-förmiger Drahtbügel 45 in einer senkrecht zur
Achse des Spießes 1 liegenden Ebene verschiebbar geführt. Das
Bügelende sitzt auf einer in einem Stanzteil 46 eingelegten
und gehaltenen Blattfeder 47, die die Bügelenden nach außen
drückt. Die Schenkel 48 des Bügels sind ebenfalls in einer Ausnehmung des Stanzteils 46 geführt und an den freien Enden durch
ein Betätigungsteil 49 überbrückt. Die Anordnung ist so getroffen, daß der gebogenen Bügelabschnitt durch die Blattfeder
47 in die Umfangsnut 10 der Fassung 7 gedrückt wird. Durch einen
Gegendruck am Betätigungsteil 49 wird die Blattfeder 47 ausgebogen und die Fassung 7 freigegeben. Die beiden Schenkel 48 des

- 13 -

Bügels ragen durch eine schlitzförmige Ausnehmung 50 des Traggriffes, der aus Holz, Kunststoff oder Metall bestehen kann.

Es sind weitere einfach ausgebildete und einfach zu bedienende Rastelemente möglich, um mit einer Umfangsnut oder einer Umfangsausnehmung der Fassungen 7 oder 11 zusammenwirken zu können.

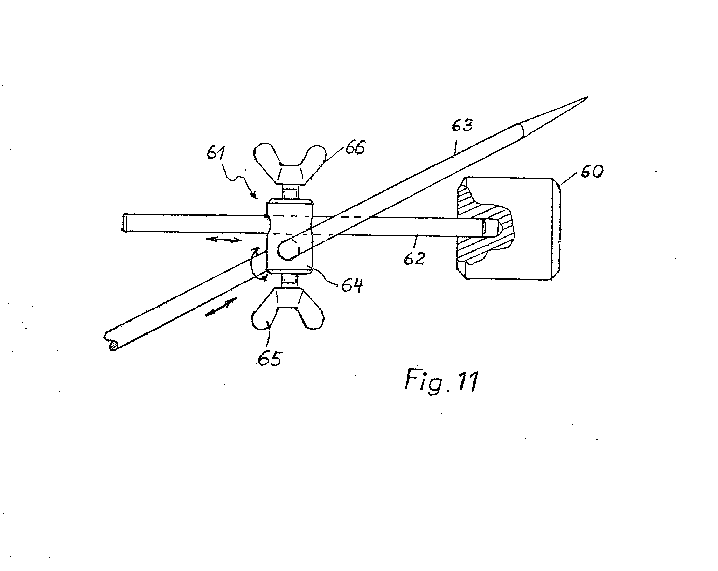

Ein weiteres einfaches Ausführungsbeispiel, insbesondere für Spieße ohne äußeren Griff zeigt Fig.11: Das Gewicht 60 ist am Ende einer geraden Stange 62 befestigt, die in einer Bohrung eines Klemmgehäuses 64 beliebig verschoben und mittels Flügelschraube 66 festgelegt werden kann. In einer dazu um 90° versetzten zweiten Bohrung kann das Klemmgehäuse 64 den Spießabschnitt 63 des Grillspießes verschiebbar und relativ drehbar aufnehmen. Mittels Flügelschraube 65 kann das Klemmgehäuse an jeder beliebigen Stelle des Spießabschnittes und in jeder beliebigen Winkelstellung festgeklemmt werden.

- 14 -

A n s p r ü c h e

1. Grillspieß für Grillgeräte mit Umlaufantrieb für den Spieß, g e k e n n z e i c h n e t durch ein Unwucht-Ausgleichgewicht (2, 5) das in gewählte Abstände von der Spießachse (15) einstellbar ist.

2. Grillspieß nach nspruch 1, dadurch g e k e n n - z e i c h n e t , daß das Unwucht-Ausgleichgewicht (60) an beliebiger Stelle des Spießes (61) mittels einer Klemmeinrichtung (62), insbesondere nach Art einer Stativklemme, ein- und feststellbar ist.

3. Grillspieß nach nspruch 1 oder 2, dadurch g e k e n n - z e i c h n e t , daß das Unwucht-Ausgleichgewicht einem Spießtraggriff (2) zugeordnet ist.

4. Grillspieß nach Anspruch 3, dadurch g e k e n n - z e i c h n e t , daß der Traggriff (2) mittels einer Spießverlängerung (6) in gewählte Abstände von und/oder gewählte Winkellagen gegenüber der Spießachse (15) ein- stellbar ist.

0014466

5. Grillspieß nach Anspruch 4, dadurch  g e k e n n z e i ch -
n e t ,  daß die Spießverlängerung (6) formhaltig flexible ist.

6. Grillspieß nach Anspruch 4 oder 5, dadurch  g e k e n n -
z e i c h n e t ,  daß die Spießverlängerung (6) zwischen
einer wirksamen Stellung (Fig.3a) und einer Nichtgebrauchsstellung (Fig.3b) in dem Traggriff (2) einstellbar ist.

7. Grillspieß nach Anspruch 6, dadurch  g e k e n n z e i ch -
n e t ,  daß in der Nichtgebrauchsstellung der Spießverlängerung (6) der Traggriff (2) starr und fluchtend mit dem
Grillspieß (1) verbunden ist.

8. Grillspieß nach Anspruch 6 oder 7, dadurch  g e k e n n -
z e i c h n e t ,  daß die beiden Stellungen der Spießverlängerung (6) gegenüber dem Traggriff (2) durch axiale
Anschläge (16) bestimmt sind.

9. Grillspieß nach Anspruch 8, dadurch  g e k e n n z e i ch -
n e t ,  daß den beiden Stellungen Rasten (10, 12) zugeordnet sind.

10. Grillspieß nach einem oder mehreren der Ansprüche 4 bis 9,
dadurch  g e k e n n z e i c h n e t ,  daß die Spießverlängerung einen flexiblen Metallschlauch (13) aufweist.

11. Grillspieß nach Anspruch 10, dadurch  g e k e n n -
z e i c h n e t ,  daß die Enden des Metallschlauches (13) jeweils mit einer kolbenartigen Fassung (7, 11) verbunden sind.

12. Grillspieß nach Anspruch 11, dadurch  g e k e n n z e i ch - n e t ,  daß jede Fassung (7, 11) eine umfängliche Rastnut (10, 12) für ein dem Traggriff (2) zugeordnetes Rastelement (21, 35, 45) aufweist.

13. Grillspieß nach Anspruch 11 oder 12, dadurch  g e k e n n - z e i c h n e t ,  daß die eine Fassung (7) mit dem Ende (8) des Spießes (1) bleibend und starr verbunden ist.

14. Grillspieß nach einem oder mehreren der Ansprüche 8 bis 13, dadurch  g e k e n n z e i c h n e t ,  daß als Rastelement im Traggriff (2) eine Hülse (32) mit Innengewinde, mit der die Außengewinde der beiden Fassungen (30, 31) verschraubbar sind, oder ein mit der Umfangsnut (10, 12) der Fassungen (7, 11) zusammenwirkendes, federndes und von außen in Lösestellung bewegbares Rastelement (21 bzw. 35 bzw. 45) vorge- sehen ist.

Fig.1

Fig. 2

Fig. 3

0014466

Fig.4

Fig.5

Fig.6

0014466

Fig.7

Fig.8

Fig.9

Fig.10

0014466

Fig. 11

0014466

Nummer der Anmeldung
EP 80 10 0594

### Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 960 067 (DUTCH BURN)<br>* Das ganze Dokument *<br><br>-- | 1,2 |
| | US - A - 3 173 358 (LINQUIST)<br>* Das ganze Dokument *<br><br>---- | 1,3 |

**KLASSIFIKATION DER ANMELDUNG (Int.Cl. 3)**

A 47 J 37/04

**RECHERCHIERTE SACHGEBIETE (Int. Cl. 3)**

A 47 J
F 16 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-05-1980 | SCHARTZ |

EPA form 1503.1  06.78